# EUROPEAN PATENT SPECIFICATION

(11) **EP 2 147 597 B1**
(45) Date of publication and mention of the grant of the patent: **23.01.2013**
(21) Application number: 09251384.5
(22) Date of filing: 22.05.2009
(51) Int. Cl.: A01K 97/12

(54) **An electronic fish-bite detector**
Elektronischer Fischbissdetektor
Détecteur électronique de touche pour la pêche

(30) Priority: 21.07.2008 GB 0813327
(43) Date of publication of application: 27.01.2010
(73) Proprietor: Fox International Group Limited, Hainault, Essex IG6 3UT (GB)
(72) Inventor: Little, Mark, Farnham Surrey GU9 7BW (GB)
(74) Representative: Crouch, David John

(56) References cited:
- GB-A- 2 237 962
- GB-A- 2 289 604
- US-A- 4 141 401
- US-B2- 6 708 441

## Description

The present invention relates to an electronic fish-bite detector having a manually operable on/off switch, and a readily removable and replaceable rigid cover in the form of a sculptured shell which fits over the detector to protect the latter when it is not in use.

A disadvantage of this construction of apparatus is that it is possible to leave the detector in a switched-on state when the cover is in place, thus undesirably running the battery low.

The present invention seeks to provide a remedy to this.

US 6708441 shows a detector having the features set out in the opening paragraph of the present specification.

Accordingly, the present invention is directed to an electronic fish-bite detector according to claim 1, having a manually operable on/off switch, and a readily removable and replaceable rigid cover in the form of a sculptured shell which fits over the detector to protect the latter when it is not in use, in which the on/off switch is a toggle switch, and the cover is provided with a portion which is so positioned that if the on/off switch is left in its on position when the cover is fitted over the detector, that portion will nudge the switch into its off position.

The switch is more especially operable by hand if it protrudes from the rest of the detector. In that case the said portion may be on an inside part of a hollow protuberance on the cover, which accommodates the switch.

Preferably, the cover is provided with a cupped portion which hooks over the intended top of the detector, and the intended bottom part of the cover has a resilient clip which snaps on to a bottom portion of the detector.

The off position of the on/off switch may be higher than the on position and the said portion which nudges the switch is positioned on a lower inner part of the said hollow protuberance to engage the underside of the toggle switch. As a result, as the cover is pivoted about the top of the detector bringing the clip of the cover towards the bottom of the detector, the resilience of the toggle switch will urge the cover downwardly relative to the detector, reducing the likelihood that the engagement between the nudging portion and the switch will disengage the top of the cover from the top of the detector.

Preferably, the nudging portion slants in relation to the toggle switch and/or is curved.

The interior of the hollow protuberance may taper in the outward direction.

Preferably, the switch is on an intended front face of the detector. Control knobs, as well as a light emitting diode and a speaker output, may also be provided on this front face.

An example of an electronic fish-bite detector embodying the present invention will now be described in greater detail with reference to the accompanying drawings, in which:
- Figure 1: shows a perspective view of an electronic fish-bite detector embodying the present invention, from the front, from above, and to one side;
- Figure 2: shows a perspective view of the detector shown in Figure 1 from the other side and slightly to the front thereof, with a cover therefor juxtaposed;
- Figure 2a: shows, on a larger scale, details of the inside of the cover shown in Figure 2;
- Figure 3: shows a part-sectional perspective view of the detector and cover combination shown in Figure 2, with the cover in an intermediate stage of engagement with the detector;
- Figure 4: shows details of parts of Figure 3 on a larger scale with the cover in a position closer still to its full engagement position with the detector; and
- Figure 5: shows the same portions as shown in Figure 4 with the cover fully engaging the detector.

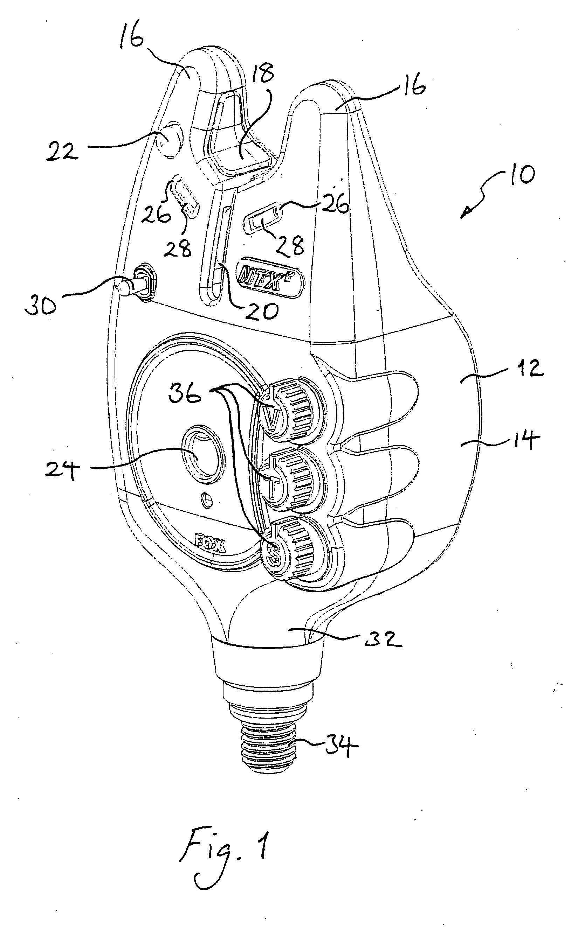

The electronic fish-bite detector 10 shown in Figure 1 comprises a rigid plastics housing 12 having a bulbous lower rear portion for housing batteries and two spaced-apart upwardly extending ear portions 16 defining a crotch portion 18 in which can be seated a portion of a fishing rod (not shown) when the detector is in use. A slot 20 extends downwardly from the crotch portion 18 within which is arranged a wheel (not shown), the fishing line of the rod engaging this wheel when the detector is in use. Sensors (not shown) are provided to detect rotation of the wheel. The sensors (not shown) are connected to circuitry to trigger illumination of a multi-colour light emitting diode unit 22 and to emit an audible signal from a beeper 24, also positioned on a front face of the detector. The front of the detector is also provided with two slanting elongate beta light recesses 26 accommodating respective elongate beta lights 28.

The front face of the detector is also provided with an on/off toggle switch 30 which is so constructed that in its on position the toggle is substantially horizontal and in its off position the toggle is slanted upwardly. The lower end 32 of the detector tapers down to a screw threaded shank 34 for attaching the detector to a bankstick or other support.

Three generally circular rotary adjustment knobs 36 are provided on the front face of the detector 10 in a linear arrangement one above the other. The uppermost knob 36 controls the volume, the middle switch controls the tone and the lowermost switch controls the sensitivity of the illumination of the detector.

The detector 10 is provided with a rigid plastics hardcase cover 40 having the form of a shell sculptured to fit the front of the detector 10. At its upper end it is provided with an elongate cupped portion 42 dimensioned to hook over the ears 16 of the detector 10.
The cover 40 has a first bulbous hollow protuberance 44 for accommodating the LED unit 22, a second bulbous hollow protuberance 46 for accommodating the toggle switch 30, and an elongate shaped hollow protuberance 48 for accommodating the three control knobs 36. The cover also tapers at its lower end 50 and is provided with a circlip 52 which snaps on to the generally circular tapered lower end 32 of the detector 10. Thus, to place the cover 40 protectively and securely on the detector 10, the elongate cup 42 is hooked over the ears 16 and the cover is pivoted about the ears 16 so that its lower end 50 approaches and engages the lower end 32 of the detector until the circlip 52 snap-fits therearound to hold the cover 40 firmly in place on the detector 10.

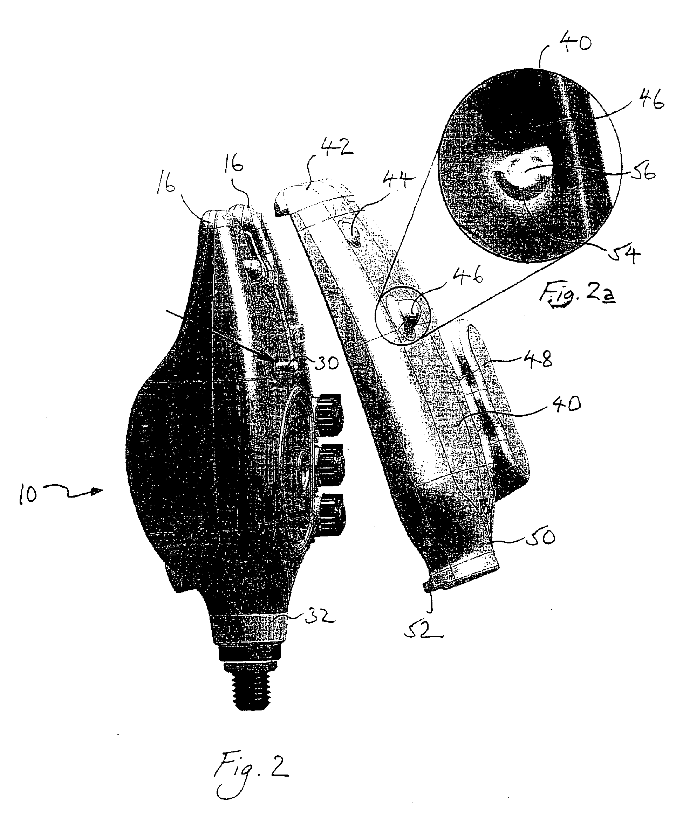

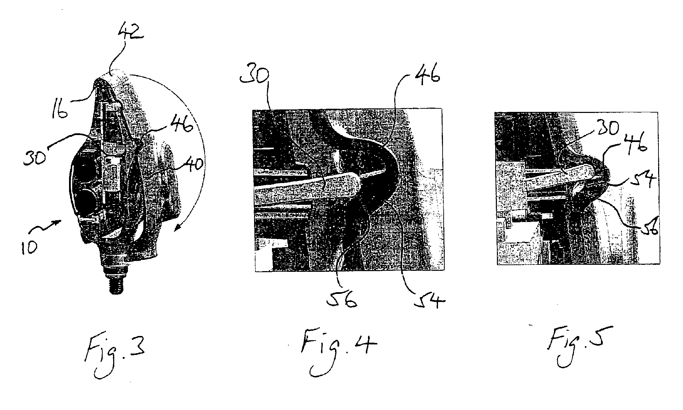

The interior of the hollow protuberance 46 which accommodates the toggle switch 30 is shown in greater detail in Figure 2a. Thus, it has a lower portion 54 filled in with solid plastics material. This is shaped to provide a slanting surface 56 which is concave so that it is curved as viewed from the rear of the cover 40, curved at an interior end as viewed from above the cover 40, and curved in a generally vertical cross-sectional plane. Some of these features can also be seen clearly in Figures 3 to 5.

As a result, as the hard cover 40 is positioned on to the detector 10 and pivoted about the ear 16 in the manner already described, the forward end of the toggle switch 30 rides up the slanting surface 56 which thereby acts as a ramp. The further the cover is pivoted on to the detector 10, the further upwards the toggle switch 30 is moved from its on position until finally, when the cover fully engages the detector 10, the toggle switch 30 is in its off position with its outer end accommodated in the unfilled interior of the bulbous protuberance 46. As a result, the cover 40 cannot be placed fully on to the detector 10 without ensuring that the detector 10 is switched off, if necessary by movement of the toggle switch 30 to its off position.

The electronic circuitry of the detector (not shown) is located in the interior thereof. The form of the circuitry is not central to the present invention and will not be described because it is well known in the art and are fully disclosed for example in EP-A-0570117 and in EP-A-1614348.

Numerous variations and modifications to the illustrated electronic bite detector may occur to the reader without taking the resulting construction outside the scope of the present invention. To give one example only, the toggle of the toggle switch 30 may be in its off position when slanting downwardly, instead of upwardly, and the filled portion 54 and the slanting surface 56 relocated in the upper interior of the hollow protuberance 46.

## Claims

1. An electronic fish-bite detector (10) having a manually operable on/off switch (30), and a readily removable and replaceable rigid cover (40) in the form of a sculptured shell which fits over the detector (10) to protect the latter when it is not in use, **characterised in that** the on/off switch (30) is a toggle switch, and the cover (40) is provided with a portion (54) which is so positioned that if the on/off switch (30) is left in its on position when the cover (40) is fitted over the detector (10), that portion (54) will nudge the switch (30) into its off position.

2. An electronic fish-bite detector according to claim 1, **characterised in that** the switch (30) protrudes from the rest of the detector (10).

3. An electronic fish-bite detector according to claim 2, **characterised in that** the said portion (54) is on an inside part of a hollow protuberance (46) on the cover (40), which accommodates the switch (30).

4. An electronic fish-bite detector according to any preceding claim, **characterised in that** the cover (40) is provided with a cupped portion (42) which hooks over the intended top of the detector (10), and the intended bottom part of the cover has a resilient clip (52) which snaps on to a bottom portion (32) of the detector (10).

5. An electronic fish-bite detector according to any preceding claim, **characterised in that** the off position of the toggle switch (30) is higher than the on position.

6. An electronic fish-bite detector according to claim 5 read as appended to claim 3, **characterised in that** the said portion (54) which nudges the switch (30) is positioned on a lower inner part of the said hollow protuberance (46) to engage the underside of the toggle switch (30).

7. An electronic fish-bite detector according to any preceding claim, **characterised in that** the nudging portion (54) slants in relation to the toggle switch (30) and/or is curved.

8. An electronic fish-bite detector according to claim 3 or to any one of claims 4 to 7 read as appended directly or indirectly to claim 3, **characterised in that** the interior of the hollow protuberance (46) tapers in the outward direction.

9. An electronic fish-bite detector according to any preceding claim, **characterised in that** the switch (30) is on an intended front face of the detector (10).

10. An electronic fish-bite detector according to claim 9, **characterised in that** control knobs (36), as well as a light emitting diode (22) and a speaker output (24), are also provided on the intended front face of the detector (10).

## Patentansprüche

1. Elektronischer Fischbissanzeiger (10) mit einem manuell bedienbaren Ein/Aus-Schalter (30) und einer leicht abnehm- und austauschbaren stabilen Abdeckung (40) in Gestalt einer geformten Muschel, die über den Anzeiger (10) passt, um diesen bei Nichtgebrauch zu schützen, **dadurch gekennzeichnet, dass** der Ein/Aus-Schalter (30) ein Kipphebelschalter ist und die Abdeckung (40) einen Abschnitt (54) aufweist, der so angeordnet ist, dass dieser Abschnitt (54) den Schalter (30) in die Ausschaltstellung schiebt, wenn der Ein/Aus-Schalter (30) beim Aufstecken der Abdeckung (40) auf den Anzeiger (10) in der Einschaltstellung verbleibt.

2. Elektronischer Fischbissanzeiger nach Anspruch 1, **dadurch gekennzeichnet, dass** der Schalter (30) aus dem übrigen Anzeiger (10) herausragt.

3. Elektronischer Fischbissanzeiger nach Anspruch 2, **dadurch gekennzeichnet, dass** sich der genannte Abschnitt (54) auf einem Innenteil einer hohlen Ausstülpung (46) auf der Abdeckung (40) befindet, die den Schalter (30) aufnimmt.

4. Elektronischer Fischbissanzeiger nach einem der vorstehenden Ansprüche, **dadurch gekennzeichnet, dass** die Abdeckung (40) mit einem kappenförmigen Abschnitt (42) versehen ist, der über die vorgesehene Oberkante des Anzeigers (10) angehakt ist, und das vorgesehene Unterteil der Abdeckung eine federnde Klemme (52) aufweist, die auf einen unteren Abschnitt (32) des Anzeigers (10) aufschnappt.

5. Elektronischer Fischbissanzeiger nach einem der vorstehenden Ansprüche, **dadurch gekennzeichnet, dass** die Ausschaltstellung des Kipphebelschalters (30) höher ist als die Einschaltstellung.

6. Elektronischer Fischbissanzeiger nach Anspruch 5, soweit sich dieser auf Anspruch 3 bezieht, **dadurch gekennzeichnet, dass** der genannte Abschnitt (54), der den Schalter (30) anschiebt, auf einem unteren Innenteil der genannten hohlen Ausstülpung (46) angeordnet ist, so dass er in Eingriff mit der Unterseite des Kipphebelschalters (30) ist.

7. Elektronischer Fischbissanzeiger nach einem der vorstehenden Ansprüche, **dadurch gekennzeichnet, dass** der anschiebende Abschnitt (54) im Verhältnis zum Kipphebelschalter (30) geneigt und/oder gekrümmt ist.

8. Elektronischer Fischbissanzeiger nach Anspruch 3 oder einem der Ansprüche 4 bis 7, soweit sich diese unmittelbar oder mittelbar auf Anspruch 3 beziehen, **dadurch gekennzeichnet, dass** die Innenseite der hohlen Ausstülpung (46) nach außen hin konisch zuläuft.

9. Elektronischer Fischbissanzeiger nach einem der vorstehenden Ansprüche, **dadurch gekennzeichnet, dass** der Schalter (30) sich auf einer vorgesehenen Stirnfläche des Anzeigers (10) befindet.

10. Elektronischer Fischbissanzeiger nach Anspruch 9, **dadurch gekennzeichnet, dass** des Weiteren Drehknöpfe (36) sowie eine Leuchtdiode (22) und einen Lautsprecherausgang (24) auf der vorgesehenen Stirnfläche des Anzeigers (10) vorgesehen sind.

## Revendications

1. Détecteur de touche électronique pour la pêche (10) ayant un interrupteur « marche/arrêt » (30) manuel et un capot rigide (40) amovible et remplaçable sous forme de coque sculptée qui s'ajuste sur le détecteur (10) afin de protéger ce dernier lorsqu'il n'est pas utilisé, **caractérisé en ce que** l'interrupteur « marche/arrêt » (30) est un interrupteur à bascule et le capot (40) est doté d'une portion (54) qui est positionnée de manière que, si l'interrupteur « marche/arrêt » (30) est laissé en position « marche » lorsque le capot (40) est ajusté sur le détecteur (10), cette portion (54) poussera l'interrupteur (30) dans sa position « arrêt ».

2. Détecteur de touche électronique pour la pêche selon la revendication 1, **caractérisé en ce que** l'interrupteur (30) dépasse du reste du détecteur (10).

3. Détecteur de touche électronique pour la pêche selon la revendication 2, **caractérisé en ce que** ladite portion (54) se situe sur la partie interne d'une protubérance creuse (46) sur le capot (40), laquelle reçoit l'interrupteur (30).

4. Détecteur de touche électronique pour la pêche selon l'une quelconque des revendications précédentes, **caractérisé en ce que** le capot (40) est doté d'une portion incurvée (42) qui vient s'accrocher sur le dessus prévu du détecteur (10), et la partie inférieure prévue du capot présente une pince élastique (52) qui vient s'insérer sur la partie inférieure (32) du détecteur (10).

5. Détecteur de touche électronique pour la pêche selon l'une quelconque des revendications précédentes, **caractérisé en ce que** la position « arrêt » de l'interrupteur à bascule (30) est plus haute que la position « marche ».

6. Détecteur de touche électronique pour la pêche selon la revendication 5 lue comme dépendante de la revendication 3, **caractérisé en ce que** ladite portion (54) venant pousser l'interrupteur (30) est positionnée sur une partie interne inférieure de ladite protubérance creuse (46) afin de venir en prise avec le bas de l'interrupteur à bascule (30).

7. Détecteur de touche électronique pour la pêche selon l'une quelconque des revendications précédentes, **caractérisé en ce que** la portion formant poussoir (54) est inclinée par rapport à l'interrupteur à bascule (30) et/ou est incurvée.

8. Détecteur de touche électronique pour la pêche selon la revendication 3 ou selon l'une quelconque des revendications 4 à 7 lue comme étant directement ou indirectement dépendante de la revendication 3, **caractérisé en ce que** l'intérieur de la protubérance creuse (46) s'amincit vers l'extérieur.

9. Détecteur de touche électronique pour la pêche selon l'une quelconque des revendications précédentes, **caractérisé en ce que** l'interrupteur (30) est situé sur une face avant prévue du détecteur (10).

10. Détecteur de touche électronique pour la pêche selon la revendication 9, **caractérisé en ce que** des boutons de commande (36) ainsi qu'une diode électroluminescente (22) et une sortie de haut-parleur (24) sont également fournis sur la face avant prévue du détecteur (10).
